Europäisches Patentamt

European Patent Office

Office européen des brevets

(11) Publication number: 0 481 401 A1

# EUROPEAN PATENT APPLICATION

(21) Application number: 91117490.2

(22) Date of filing: 14.10.91

(51) Int. Cl.⁵: C03C 25/02

(30) Priority: 18.10.90 US 602553

(43) Date of publication of application:
22.04.92 Bulletin 92/17

(84) Designated Contracting States:
BE DE ES FR GB IT

(71) Applicant: PPG INDUSTRIES, INC.
One PPG Place
Pittsburgh Pennsylvania 15272(US)

(72) Inventor: Jensen, Thomas Hulegaard
4221 Burnett Drive
Murrysville, Pennsylvania 15668(US)

(74) Representative: Sternagel, Hans-Günther, Dr.
et al
Patentanwalte Dr. Michael Hann, Dr. H.-G.
Sternagel, Dr. H. Dörries, Sander Aue 30
W-5060 Bergisch Gladbach 2(DE)

(54) Method and apparatus for redirecting air flow in a process for coating fibres.

(57) The instant invention presents both an apparatus and method for redirecting the flow of entrained air surrounding a fan of rapidly moving glass filaments or fibers away from the vicinity of an applicator surface carrying a liquid used to coat the fibers. In particular, the instant invention accomplishes this by providing at least one pair of aerodynamic stripping and deflecting surfaces (10,20) to strip entrained air away from the front and rear of the fan (26) and deflect the air away from the surface of the applicator (28) so as to reduce turbulence in its vicinity and thereby allow the moving filaments to be coated more uniformly with a liquid binder or size solution. In the preferred embodiment, air removed from one side of the fan is redirected through it in order to remove any residual air that was not removed by the initial action of the aerodynamic stripping and deflecting surfaces. In an alternative embodiment, the flow of air through the fan is augmented by injecting a second stream of air to enhance the removal of this residual air from the fan.

FIG. 2

The instant invention pertains to a method and apparatus for redirecting the flow of air near a liquid applicator surface. More specifically, the instant invention relates to a method and apparatus for removing the layer of air which is carried along and expelled from a contracting fan of rapidly moving filamentary material such as glass. If this air is not removed and redirected, it will impinge upon the surface of the applicator and, as a result, an uneven distribution of the liquid binder or size solution used to coat the fibers will occur. In the preferred embodiment, the instant invention takes the form of a stationary hood or shroud comprised of two frame assemblies having aerodynamic deflector surfaces. The hood or shroud may be readily mounted on top of a conventional belt or roller sump-type applicator. In an alternative embodiment, a separate stream of air supplied from an external source may be used to augment the flow of air channelled away from the vicinity of the surface of the applicator.

Background of the Invention

In the manufacturing of textile fibers, it is a common practice to apply various solutions of liquid binders, sizes, and dyes. These solutions are applied to these fibers for various purposes. Liquid materials are often applied to these fibers to render them receptive to the application of other substance such as elastomers, organic polymer materials, and coatings. In the case of glass fibers, for example, liquid binders or sizes are usually applied so as to render the glass compatible with an intended resin matrix when it is to be used for reinforcement purposes.

Liquid binders or sizes have conventionally been applied to fibers using pads, rollers, sprays, and belt-type applicators. In the manufacturing of glass fibers the use of a belt or roller sump applicator is quite common and it has enjoyed considerable success. A typical belt type applicator is illustrated in U.S. Patent No. 3,920,431 (Reese) and others can be found in the book entitled "The Manufacturing Technology of Continuous Glass Fibres" by K. L. Loewenstein, published by the Elsevier Scientific Publishing Company, 1973, at pages 122-128. In these types of applicators the binder solution is applied to the surface of a continuously moving belt or roller by passing it through a sump reservoir inside a housing. The housing is typically enclosed on all sides except for the front of the applicator where it is open to permit the moving glass fibers to contact the belt where they are coated with the liquid solution carried up from the sump.

In the manufacture of continuous fiber glass strand, molten glass issues from a plurality of tips or orifices located on what is referred to as the tip plate of an electrically heated fiber glass bushing assembly. Molten glass flowing from each tip or orifice is drawn and attenuated into an individual glass filament or fiber. Individual filaments are subsequently gathered by means of a gathering shoe, located generally beneath the elevation of the applicator, to form a multifilament strand. The gathering shoe collects the filaments into a contracting fan-shaped array of rapidly moving fibers. The strand is then wrapped onto a cardboard forming tube positioned on a rotating winder. (The winder not only serves to collect the strand onto the forming tube but also provides the force necessary to attenuate the individual streams of molten glass into substantially solid filaments.) The forming tube is typically about 12 inches in diameter and the winder may rotate at speeds up to about 6000 r.p.m. Given these illustrative parameters, it can be readily appreciated that the individual glass filaments are moving at lineal velocities up to 300 feet per second or more by the time they are contacted against the liquid-carrying applicator surface such as a belt or roller.

As the individual filaments issue from each tip they tend to draw a thin boundary layer of air along with them. The individual streams of glass issuing from the tips emerge at velocities on the order of about $10^{-4}$ feet per second or so and, at least initially, the boundary layer surrounding each of them is laminar. As the individual streams of molten glass are cooled and attenuated their velocity increases dramatically to speeds often in excess of 300 feet per second. This causes the boundary layer air to become turbulent. As the rapidly moving filaments are collected by the gathering shoe the entire array takes on the shape of a contracting fan and the now turbulent boundary layers begin to merge with adjacent ones. Also, the air occupying the decreasing interstitial space between adjacent filaments is expelled from the front and rear faces of the contracting fan. Eventually, this process establishes a continuous pattern in which air is gently drawn into the top of the fan near the tip plate, rapidly accelerated, and then violently expelled near the vicinity of the applicator.

This flow of entrained high velocity air presents considerable problems which must be overcome in order to insure that a uniform application of liquid binder or size is applied to the moving filaments. For example, turbulent air impinging on the applicator belt or roll carrying the liquid binder may cause a localized thinning of the liquid layer. Air entering along the top side of an applicator belt housing also tends to intermittently blow back the liquid binder into the housing. This air also tends to build up inside the housing and eventually this build up of pressure relieves itself intermittently as air is expelled forward through the front opening.

Thus, it would be most advantageous if, in the manufacturing of continuous glass or other textile fibers, air turbulence in the vicinity of the applicator surface could be minimized or eliminated.

Summary of the Invention

The instant invention presents both an apparatus and method for redirecting the flow of entrained air surrounding a fan of rapidly moving glass filaments or fibers from the vicinity of an applicator surface carrying a liquid used to coat the fibers. In particular, the instant invention accomplishes this by providing at least one pair of aerodynamic stripping or deflecting surfaces to strip entrained air from the front and rear of the fan and away from the applicator. In the preferred embodiment, air removed from one side of the fan is redirected through it in order to remove any residual air that was not taken off by the initial action of the aerodynamic stripping surfaces. In an alternative embodiment, the flow of air through the fan is augmented by injecting a second stream of air to enhance the removal of this residual air from the fan.

Brief Description of the Drawings

Figure 1 presents a perspective view of the applicator shroud showing the aerodynamic deflecting surfaces.

Figure 2 presents a side elevation view of the applicator shroud taken looking into Section 2-2 of Figure 1.

Figure 3 presents an illustrative representation of the flow pattern inside the applicator shroud.

Figures 4 and 5 present alternative embodiments of the instant invention in which the air flow pattern illustrated in Figure 3 is augmented by the injection of a separate stream of externally supplied air.

Detailed Description of the Invention

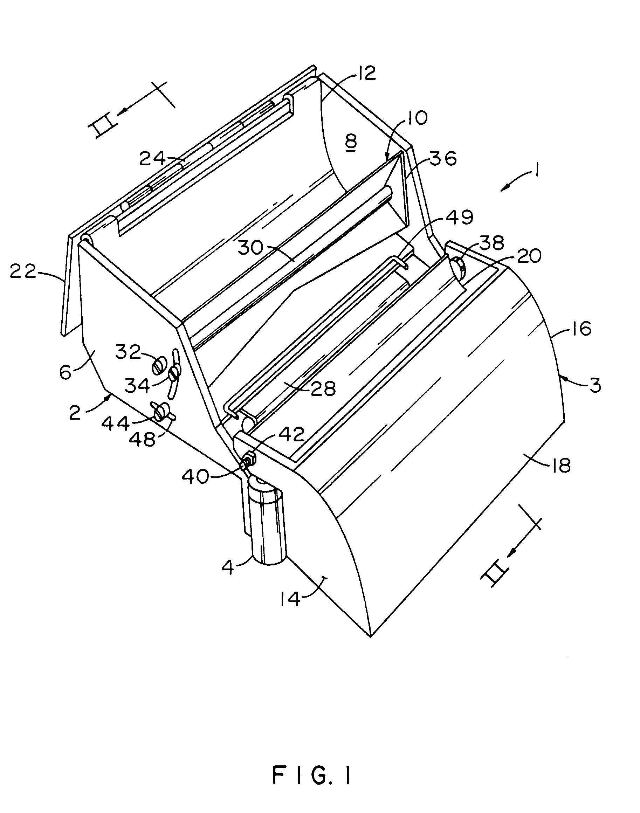

Turning now to the drawings, Figure 1 presents a perspective view looking down into the top of the applicator shroud or hood. The shroud (1) is generally comprised of a first rear frame assembly (2) and a second front frame assembly (3). The rear frame assembly is suitably adapted so that it may be mounted on top of a roller or belt-type applicator by means of conventional bolts, or other fasteners. The front frame (3) engages the rear frame (2) by means of a hinge (4) located along one side of the applicator shroud (1). This permits the front frame (3) to be opened and rotated out of the way so that the fan shaped array of moving filaments may be inserted and positioned against the surface of the applicator belt or roller. In operation, the front frame assembly is normally in a closed position as illustrated in Figure 1.

The rear frame assembly (2), in its simplest form, comprises two sidewalls (6) and (8) and both rear stripper (10) and rear deflector (12) surfaces extending horizontally between the sidewalls and rigidly attached thereto by suitable means such as welding. In the preferred embodiment, however, additional horizontal members (11 & 13) may be rigidly attached instead to define the basic structural form of rear frame assembly (2) so that the rear stripper surface (10) can be adjustably mounted inside the frame for reasons which will be subsequently discussed. Similarly, the front frame assembly (3) comprises two opposing sidewalls (14) and (16) as well as horizontally extending front deflector (18) and front stripper (20) surfaces running between them which may also be attached by welding. In the preferred embodiment, however, the front stripper surface (20) is adjustably mounted. The rear frame assembly (2) preferably contains a lid (22), affixed by means of a hinge (24), that may be closed to cover the opening to the channel (60) formed by the rear deflector and stripper surfaces so as to prevent debris from falling into it in the event of a process interruption such as a breakout or while the bushing is hanging.

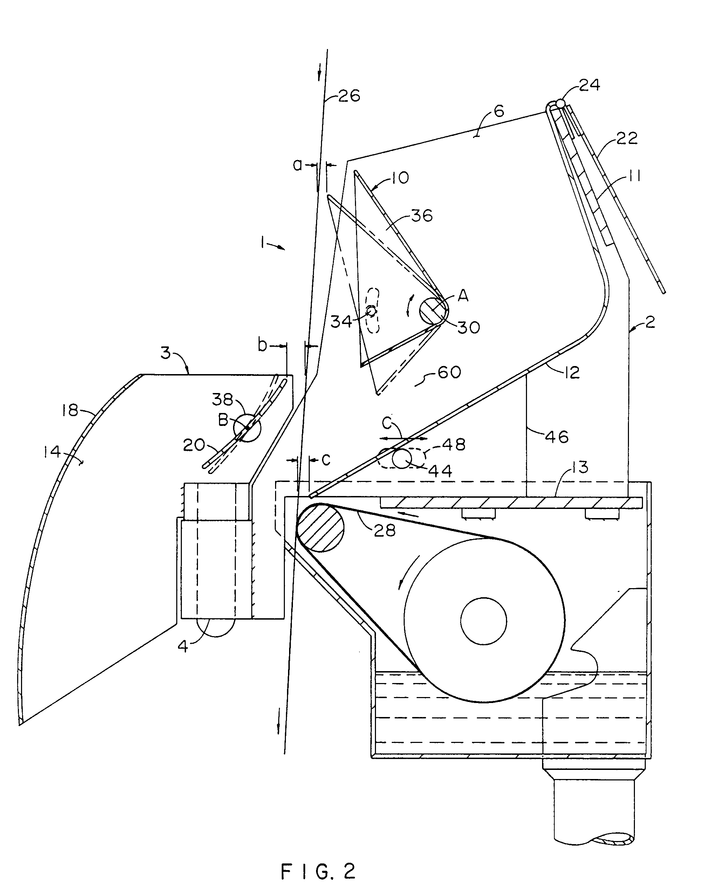

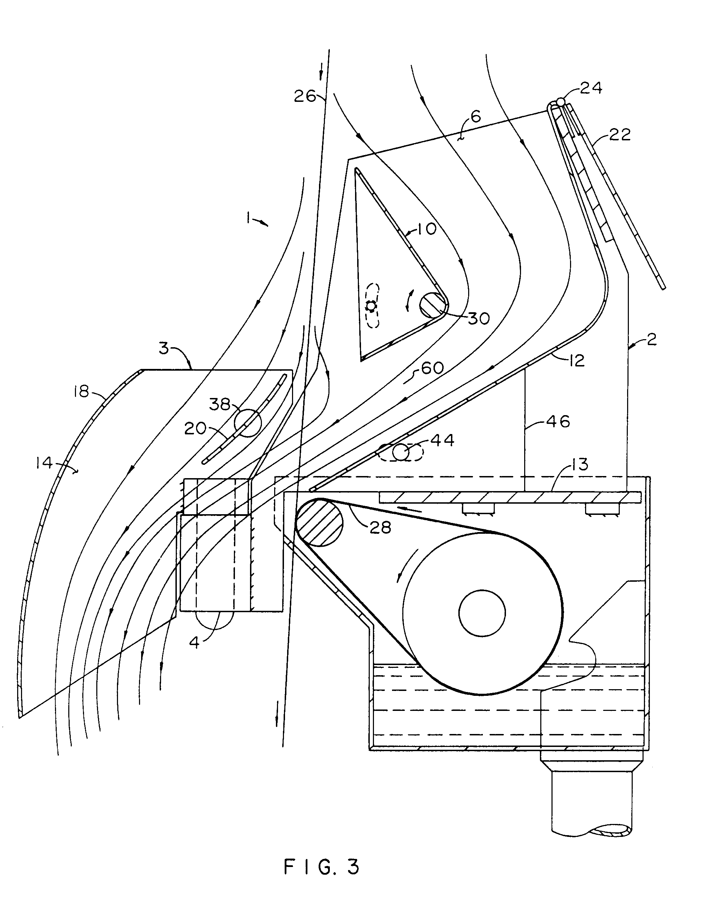

Figure 2 presents a side elevation view of the applicator shroud as used with a belt-type applicator and is taken along Section II-II of Figure 1. Here, the orientation of the deflecting and stripping surfaces with respect to one another becomes more readily apparent. The fan (26) of rapidly moving filaments passes between the front (20) and rear (10) stripper surfaces before it contacts the moving applicator belt (28). The flow of entrained air carried along with the fan is stripped away by the leading edges of both the front and rear stripper surfaces and is redirected away from the vicinity of the applicator belt. A substantial portion of the air stripped from the rear of the fan is channeled between the rear stripper (10) and rear deflector (12) surfaces and then directed forward through the fan of moving fibers just above their contact line with the applicator belt (28). This air is then redirected downwardly as it joins a secondary flow of air stripped away from the front of the fan as a result of the action of the front stripper (20) and front deflector (18) surfaces. This general flow pattern is more clearly depicted in Figure 3. Passing this rearward air through the fan helps to remove any residual boundary layer air that was not stripped away by the leading edges of the front and rear stripper surfaces.

The success of the instant invention in removing entrained boundary layer air from the moving fan of filaments depends, in large part, on the ability to minimize the distances (a & b) between the front and rear faces of the fan (26) and the leading edges of the stripper surfaces as well as the distance from the trailing edge of the rear deflector surface (c) to the fan. For this reason, it is desirable to provide means for adjusting the relative positions of these surfaces; however, as described above, it is also possible to practice a less preferred embodiment in which the stripping and deflecting surfaces are permanently positioned with respect to one another by means of welding them to the sidewalls of their respective frame assemblies. This method of construction does not permit adjusting the orientation of the surfaces with respect to the fan in order to take into account any alignment or dimensional variations which may be present.

In order to facilitate the positioning of these surfaces, means may be provided so that both the front (20) and rear (10) stripper surfaces may be rotated about an axis so that their angle of inclination with respect to the fan (26) can be adjusted. The rear stripper surface (10), which is formed from an L-shaped piece of sheet stock, may also have a cylindrical sleeve (30) welded along the length of its inside apex. As illustrated in Figures 1 and 2, the sleeve (30) extends between the rear sidewalls (6 & 8) and it is secured at each end by conventional socket head cap screws (32) inserted through an opening in the sidewalls. This provides an axis (A) about which the rear stripper surface may be rotated. A second pair of conventional cap screws (34) is inserted through a slot milled in each of the sidewalls along a radius of curvature just in front of the first pair of cap screws (32) that secure the sleeve (30) in position. These cap screws (34) engage a pair of opposing flanges (36) welded on each side of the rear stripper surface (10). This allows the stripper surface (10) to be pivoted about the sleeve (30) and, once the distance (a) between the leading edge of the rear stripper surface and fan is minimized, the cap screws (34) may be tightened thus locking the stripper surface into position.

The angle of the front stripper surface (20) is adjusted slightly differently. Thus, in a preferred embodiment, the width of the stripping surface is such that it terminates about 1/4 of an inch inside each of the sidewalls of the front frame assembly. A small disk (38) is then welded to each side of the front stripping surface along with a threaded shank (40). The shank (40) extends through each of the sidewalls (14 & 16) to define an axis (B) about which the front stripping surface may be rotated. Once the distance (b) between leading edge and fan has been minimized, a nut (42) may be threaded onto each shank and tightened so as to secure the front stripping surface (20) in position.

The position of the trailing edge of the rear deflector surface may be adjusted by means of a third pair of cap screws (44) inserted through the sidewalls of the rear frame assembly. In a preferred embodiment these screws (44) engage a flange (46) located along the bottom of each side of the rear deflector surface (12). Slots (48) are milled in the sidewalls through which the screws are inserted to engage the flange. These slots are milled along a generally horizontal direction such that moving the position of the screws forward or backward results in advancing the position of the trailing edge toward or away from the fan with the result that the distance (c) between it and the fan (26) is minimized although the curvature of the rear deflector surface (12) is bent slightly.

Since the applicator shroud is designed for extended use inside an extremely humid and possibly corrosive environment, all components should be constructed from a material that will withstand such conditions. For example, in the preferred embodiment, all components were constructed of 304 stainless steel. The stripping and deflecting surfaces were fabricated from 12 gauge stainless steel sheet. However, any other suitable materials such as aluminum or nickel alloys may be substituted. Also, drip wires (49) may be used to collect any water or other moisture present in the environment that may accumulate on the deflecting surfaces. The drip wires should be positioned to direct this accumulated moisture away from the vicinity of the applicator belt so that it does not reach the surface of the applicator and cause a dilution of the liquid binder or size being applied.

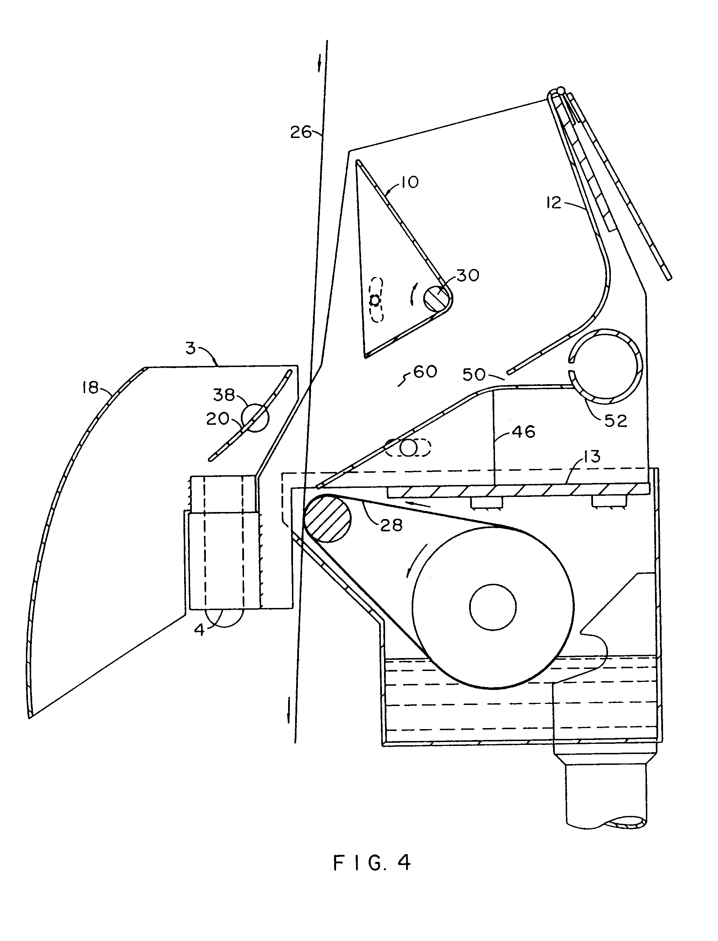

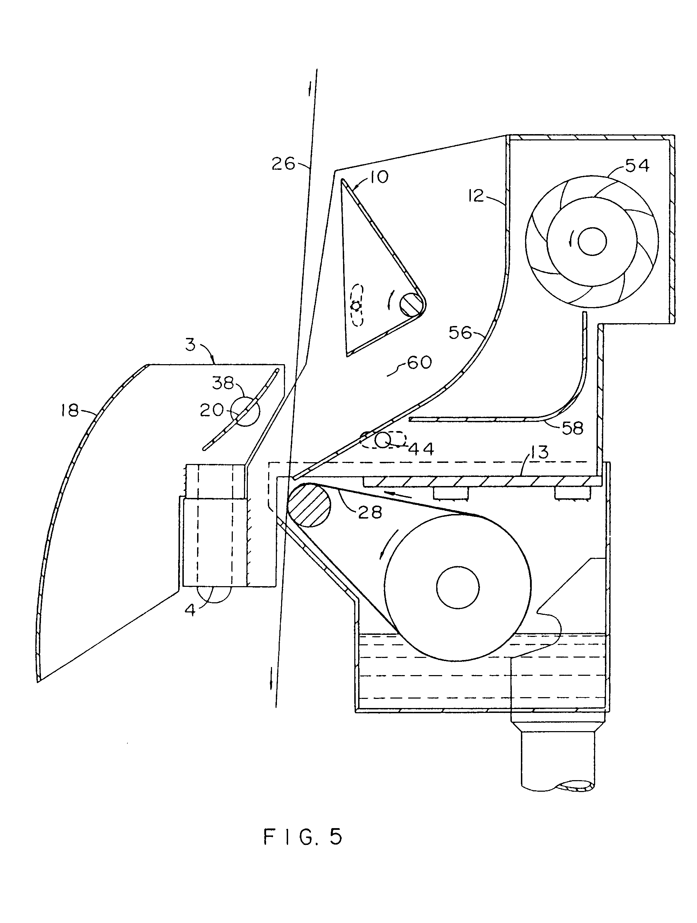

In an alternative embodiment of the instant invention, the flow of air through the fan (26) may be augmented by injecting a separate stream of air from an external supply source. For example, Figure 4 depicts an embodiment in which the rear deflector surface (12) is broken along its width by a slot or opening shown generally at (50). A slotted or perforated manifold (52) may be provided in back of this opening (50). Connecting a separate source of pressurized air to the manifold, along with appropriate means for regulating the amount of air supplied thereto, enables the velocity of the air escaping through the opening (50) to be adjusted and thus increase the velocity of the air directed through the fan. This helps to remove any air that was not completely taken off by the action of the stripping surfaces (10 & 20). In yet another embodiment illustrated in Figure 5, external air may be supplied from an appropriately powered, cylindrical, rotating squirrel-cage type fan (54) located behind the rear deflector surface. Here, an opening (56) is also provided across the width of the rear deflector surface (12) and a second deflecting surface (58) is provided to channel air blown from the rotating fan (54) through the opening (56) and into the channel (60). The fan (54) may take in air through another opening in back of the applicator housing.

While the instant invention has now been described with respect to certain aspects of its construction and operation, it is not intended that these are to be interpreted as limiting in either the spirit or scope of the invention. Similar devices, including, but not limited to the alternative embodiments described herein, which accomplish substantially the same results in substantially the same way, are contemplated as well as those already expressly described. It is also to be understood that the recitation of any particular dimensions or materials as disclosed herein is not intended to be interpreted as limiting; except, insofar as is recited in the accompanying claims.

## Claims

1. In a method for applying a liquid coating from an applicator surface to a plurality of rapidly moving fibers gathered together into the shape of a contracting fan having front and rear faces along each of which a layer of air is carried and air is expelled from the interior of said fan, the improvement comprising:
   stripping away air carried along and expelled from each face of said fan; directing the air thus stripped away from one face of said fan away from said applicator surface; and deflecting the air stripped away from the opposite face of said fan away from said applicator surface; whereby turbulence near the applicator surface is reduced and the liquid coating is more uniformly applied to the fibers.

2. In a method for applying a liquid coating from an applicator surface to a plurality of rapidly moving fibers gathered together into the shape of a contracting fan having front and rear faces along each of which a layer of air is carried and air is expelled from the interior of said fan, the improvement comprising:
   stripping away air carried along and expelled from each face of said fan; directing and channeling the air stripped away from one face of said fan through the fan; and recombining the air thus stripped with air stripped from the opposite face; whereby turbulence above the applicator surface is reduced and the liquid coating is more uniformly applied to the fibers.

3. The method of claim 2, the improvement further comprising the step of injecting a separate stream of air from a separate source of supply so as to augment the flow of air directed and channeled through the fan.

4. In a method for applying a liquid coating from an applicator surface to a plurality of rapidly moving fibers gathered together into the shape of a contracting fan having front and rear faces along each of which a layer of air is carried and air is expelled from the interior of said fan, the improvement comprising:
   stripping away the flow of air carried along and expelled from the front and rear faces of said fan; directing and channeling the air thus stripped away from the rear face of said fan through the fan; and recombining the air stripped from the rear face of said fan with air stripped from the front thereof; whereby turbulence above the applicator surface is reduced and the liquid coating is more uniformly applied to the fibers.

5. The method of claim 4, the improvement further comprising the step of injecting a separate stream of air from a separate source of supply so as to augment the flow of air directed and channeled through the fan.

6. An apparatus for directing and channeling the flow of air near a liquid applicator surface used to coat a plurality of rapidly moving fibers gathered together into the shape of a contracting fan having front and rear faces along each of which a layer of air is carried and air is expelled from the interior of said fan, said apparatus comprising:
   a first frame assembly having opposing sidewalls and at least two horizontal members positioned between and attached thereto, at least one said horizontal member being a first stripping surface inclined at an angle so as to intercept and strip away the flow of air carried along and expelled from one face of said fan;
   a second frame assembly also having opposing sidewalls and at least two horizontal members positioned between and attached thereto, at least one said horizontal member being a second stripping surface inclined at an angle so as to intercept and strip away the flow of air carried along and expelled from the opposite face of said fan; and,
   means for positioning said second frame assembly in front of said fan and said first frame assembly.

7. The apparatus of claim 6 wherein said positioning means comprises a hinge attached to one frame assembly about which the other frame assembly is pivotally mounted.

8. An apparatus for directing and channeling the flow of air near a liquid applicator surface used to coat a plurality of rapidly moving fibers gathered together into the shape of a contracting fan having front and rear faces along each of which a layer of air is carried and air is expelled from the interior of said fan, said apparatus comprising:

a first frame assembly having opposing sidewalls and at least two horizontal members positioned between and attached thereto, one said horizontal member being a first stripping surface inclined at an angle so as to intercept and strip away the flow of air carried along and expelled from one face of said fan, said second horizontal member being a first deflecting surface located behind said first stripping surface so as to define a first channel to deflect the air thus stripped through the fan above the surface of the applicator;

a second frame assembly also having opposing sidewalls and at least two horizontal members positioned between and attached thereto, one said horizontal member being a second stripping surface inclined at an angle so as to intercept and strip away the flow of air carried along the surface and expelled from the opposite face of said fan, said second horizontal member being a second deflecting surface located in front of said second stripping surface so as to define a second channel to deflect the air thus stripped away as well as to channel the flow of air passing through said fan; and,

means for positioning said second frame assembly in front of said fan and said first frame assembly.

9. The apparatus of claim 8 wherein said positioning means comprises a hinge attached to one frame assembly about which the other frame assembly is pivotally mounted.

10. The apparatus of claim 8 further comprising means for injecting a separate stream of air from a source of supply so as to augment the flow of air passing through said fan.

11. The apparatus of claim 10 wherein said injecting means further comprises a manifold located behind said first deflecting surface, said manifold and said first deflecting surface each having at least one aperture through which air is injected.

12. The apparatus of claim 10 wherein said injecting means further comprises a rotating fan located behind said first deflecting surface, said first deflecting surface also having at least one aperture through which air is injected as a result of the rotation of said fan.

13. An apparatus for directing and channeling the flow of air near a liquid applicator surface used to coat a plurality of rapidly moving fibers gathered together into the shape of a contracting fan having front and rear faces along each of which a layer of air is carried and air is expelled from the interior of said fan, said apparatus comprising:

a first frame assembly having opposing sidewalls with rear stripper and deflector surfaces positioned between and attached thereto, said rear stripper surface being inclined at an angle so as to intercept and strip away the flow of air carried along and expelled from the rear face of said fan, said rear deflector surface located behind said rear stripper surface so as to define a first channel to deflect the air thus stripped away through the fan above the surface of the applicator;

a second frame assembly having opposing sidewalls with front stripper and deflector surfaces positioned between and attached thereto, said front stripper surface being inclined at an angle so as to intercept and strip away the flow of air carried along and expelled from the front face of said fan, said front deflector surface being positioned in front of said front stripper surface so as to define a channel to deflect the air thus stripped away from the front face of said fan as well as to channel the flow of air passing through said fan; and,

means for positioning said second frame assembly in front of said fan and said first frame assembly.

14. The apparatus of claim 13 wherein said rear stripper surface is adjustably mounted within said first frame assembly so that the angle at which said stripper surface intercepts and strips away the layer of air carried along the rear face of said fan and expelled from the interior thereof can be varied.

15. The apparatus of claim 13 wherein said front stripper surface is adjustably mounted within said second frame assembly so that the angle at which said stripper surface intercepts and strips away the layer of air carried along the front face of said fan and expelled from the interior thereof can be varied.

16. The apparatus of claim 13 wherein said positioning means comprises a hinge attached to one frame assembly about which the other frame assembly is pivotally mounted.

17. The apparatus of claim 13 further comprising means for injecting a separate stream of air from a source of supply so as to augment the flow of air passing through said fan.

18. The apparatus of claim 17 wherein said injecting means further comprises a manifold located behind said rear deflecting surface, said manifold and said rear deflecting surface each having at least one aperture through which air is injected.

19. The apparatus of claim 17 wherein said injecting means further comprises a rotating fan located behind said rear deflecting surface, said rear deflecting surface also having at least one aperture through which air is injected as a result of the rotation of said fan.

FIG. 1

F I G. 2

F I G. 3

F I G. 4

FIG. 5

European
Patent Office

EUROPEAN SEARCH
REPORT

Application Number

EP 91 11 7490

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 141 178 (FIBREGLASS LIMITED)<br>* page 2, line 34 - line 45, paragraph X * *<br>– – – | 1,2,4 | C 03 C 25/02 |
| X | DE-A-3 818 266 (AEG KABEL AG.)<br>* column 1, line 26 - line 33; figure * *<br>– – – | 1 | |
| A | US-A-3 977 854 (R.M. FULMER ET AL.)<br>* abstract * *<br>– – – – – | | |

TECHNICAL FIELDS
SEARCHED (Int. Cl.5)

C 03 C

The present search report has been drawn up for all claims

| Place of search | Date of completion of search | Examiner |
|---|---|---|
| The Hague | 24 January 92 | REEDIJK A.M.E. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

 

& : member of the same patent family, corresponding
document